# FASCICULE DE BREVET EUROPEEN

(11) **EP 3 899 082 B1**
(45) Date de publication et mention de la délivrance du brevet: **30.07.2025**
(21) Numéro de dépôt: 19850728.7
(22) Date de dépôt: 20.12.2019
(51) Int. Cl.: C23C 4/11, C04B 41/89, C23C 30/00, F01D 5/28

(54) **PIECE AERONAUTIQUE RESISTANTE AU SABLE FONDU**
SCHMELZSANDBESTÄNDIGES LUFTFAHRTTEIL
FUSED SAND-RESISTANT AERONAUTICAL PART

(30) Priorité: 20.12.2018 FR 1873692
(43) Date de publication de la demande: 27.10.2021
(73) Titulaire: SAFRAN, 75015 Paris (FR)
(72) Inventeur: JOULIA, Aurélien, 77550 MOISSY-CRAMAYEL (FR); BERNARD, Benjamin Dominique Roger Joseph, 37300 JOUE-LES-TOURS (FR); BIANCHI, Luc Patrice, 77550 MOISSY-CRAMAYEL (FR)
(74) Mandataire: Regimbeau
(86) Numéro de dépôt international: PCT/FR2019/053268
(87) Numéro de publication internationale: WO 2020/128401

(56) Documents cités:
- EP-A1- 3 178 799
- US-A1- 2010 159 151
- US-A1- 2017 022 113
- R I WEBSTER ET AL: "INVESTIGATION OF RARE EARTH (RE) TITANATES AS POTENTIAL ENVIRONMENTAL BARRIER COATING (EBC) CONSTITUENTS FOR MITIGATION OF CMAS ATTACK", 25 August 2017 (2017-08-25), XP055637251, Retrieved from the Internet <URL:https://www.mrs-mexico.org.mx/imrc2017/app_abstract-pdf.php?id_res=01258> [retrieved on 20191029]
- XIANG HUIMIN ET AL: "Crystal structure, mechanical and thermal properties of Yb4Al2O9: A combination of experimental and theoretical investigations", JOURNAL OF THE EUROPEAN CERAMIC SOCIETY, ELSEVIER SCIENCE PUBLISHERS, BARKING, ESSEX, GB, vol. 37, no. 6, 12 February 2017 (2017-02-12), pages 2491 - 2499, XP029955035, ISSN: 0955-2219, DOI: 10.1016/J.JEURCERAMSOC.2017.02.016

## Description

### DOMAINE DE L'INVENTION

L'invention concerne une pièce aéronautique, telle qu'une aube de turbine ou une ailette de distributeur par exemple, utilisée dans l'aéronautique.

### ETAT DE LA TECHNIQUE

Dans un turboréacteur, les gaz d'échappement générés par la chambre de combustion peuvent atteindre des températures élevées, supérieure à 1200°C, voire 1600°C. Une pièce du turboréacteur, en contact avec ces gaz d'échappement, telle qu'une aube de turbine par exemple, doit ainsi être capable de conserver ses propriétés mécaniques à ces températures élevées. De plus, la corrosion et/ou l'oxydation du substrat de la pièce est favorisée par ces températures élevées.

A cet effet, il est connu de protéger la pièce contre des températures trop élevées, l'oxydation et/ou la corrosion, en la recouvrant d'une barrière envi ronnementale.

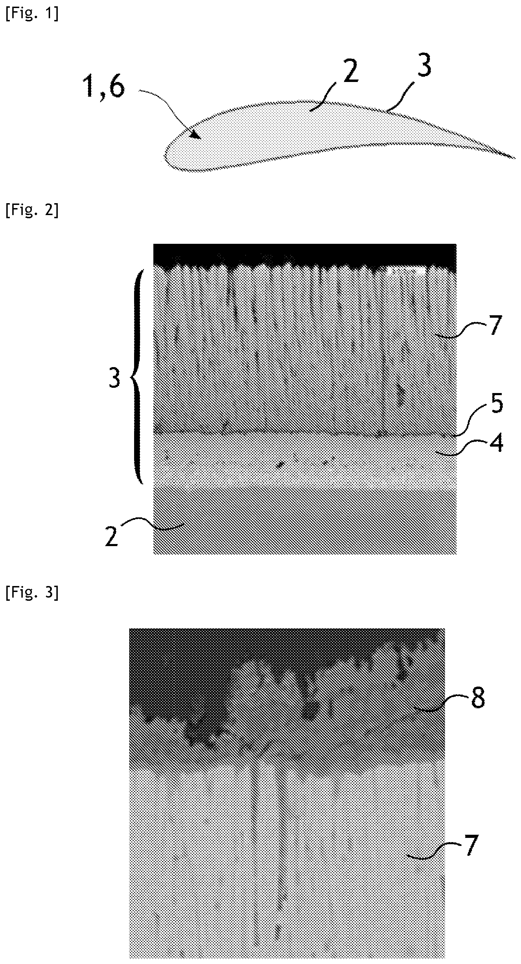

La figure 1 illustre schématiquement une section d'une pièce 1 de turbine connue, par exemple une aube 6 de turbine ou une ailette de distributeur. La pièce 1 comprend un substrat 2, par exemple en superalliage métallique monocristallin. Le substrat 2 est recouvert d'un revêtement, par exemple d'une barrière environnementale 3.

La figure 2 illustre schématiquement une section de la pièce 1 de turbine connue. La pièce 1 comprend le substrat 2 recouvert de la barrière environnementale 3. La barrière environnemental 3 comprend typiquement une sous-couche 4, une couche protectrice 5 et une couche thermiquement isolante 7. La sous-couche 4 recouvre le substrat 2. La sous-couche 4 est recouverte par la couche protectrice 5, formée par exemple par oxydation de la sous-couche 4. La couche protectrice 5 permet de protéger le substrat 2 de la corrosion et/ou de l'oxydation. La couche thermiquement isolante 7 recouvre la couche protectrice 5. La couche thermiquement isolante 7 peut être en céramique, par exemple en zircone yttriée.

La barrière environnementale 3 se dégrade particulièrement lorsqu'elle est exposée à des particules de sable (par exemple des composés inorganiques tels que la silice) ou de manière plus générale à des oxydes de calcium, de magnésium, d'aluminium et/ou silicium, dont l'acronyme est CMAS. Les CMAS présentent une température de fusion inférieure à celle des matériaux de la barrière environnementale 3, et peuvent ainsi s'infiltrer dans un état fondu dans la barrière environnementale 3 lors de l'utilisation de la pièce 1, particulièrement dans les interstices de la barrière environnementale 3. L'infiltration des CMAS dans la barrière environnementale 3 entraîne la rigidification de la barrière environnementale 3, ce qui peut entraîner sa rupture mécanique dans les conditions d'utilisation de la turbine. L'infiltration des CMAS entraîne également une dissolution de la couche thermiquement isolante 7 par réaction chimique entre le ou les CMAS et la couche thermiquement isolante 7.

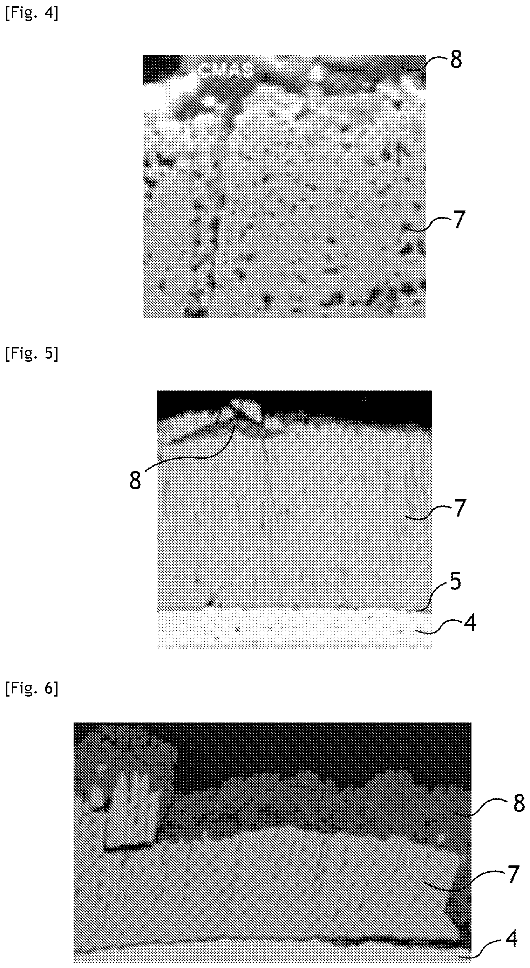

En référence à la figure 3 et à la figure 4, un ou plusieurs composés CMAS 8 peuvent s'infiltrer dans les interstices de la couche thermiquement isolante 7, entraînant la rigidification de la couche thermiquement isolante 7.

En référence à la figure 5 et à la figure 6, la couche thermiquement isolante 7 peut être écaillée et rompue par une insertion de composés CMAS 8 lors de l'utilisation de la pièce 1, et par exemple être désolidarisée de la sous-couche 4.

Levi *et al.* (Levi, C. G., Hutchinson, J. W., Vidal-Sétif, M. H., & Johnson, C. A. (2012). Environmental degradation of thermal-barrier coatings by molten deposits. MRS bulletin, 37(10), 932-941) décrit l'utilisation d'une pièce 1 recouverte de zirconate de terre rare, tel que Gd₂Zr₂O₇ (GZO). Au contact de CMAS, le zirconate de terre rare est dissout, et précipite d'une part en une phase de fluorite Zr(Gd,Ca)Oₓ et d'autre part en une phase très stable d'apatite Ca₂Gd₈(SiO₄)₆O₂. Ces précipitations entraînent le bouchage des interstices présents entre les différentes colonnes de GZO et/ou de la couche thermiquement isolante 7 et la formation d'une barrière de diffusion, permettant de ralentir le taux de dissolution des colonnes de GZO et/ou de couche thermiquement isolante 7.

En revanche, la précipitation de CMAS fondu, décrite par Levi *et al.,* bouche les interstices lorsque le CMAS est entré dans les interstices du GZO et/ou de la couche thermiquement isolante 7, entraînant une détérioration des propriétés mécaniques de la couche environnementale 3.

Par exemple, une couche réactive de zirconate de lanthane (La₂Zr₂O₇) peut également être déposée sur une pièce de turbine. Lors d'une mise en contact de la couche réactive avec des CMAS fondus, une partie de la couche réactive est dissoute, et la réaction entre la couche réactive et les CMAS produit une phase apatite de Ca₂La₈(SiO₄)₆O₂. Des fissures apparaissent dans la couche réactive, entraînant l'apparition de zones de la pièce qui ne sont pas protégées des CMAS.

US 2016/011589 décrit une couche réactive comprenant un revêtement anti-CMAS comprenant un oxyde présentant une structure de maille orthorhombique, permettant d'éviter l'infiltration de CMAS fondu dans la barrière environnementale.

US2017/022113A1 et EP3178799A1 divulguent l'utilisation d'un oxyde de formule RE2TiO5 (RE= Y, Yb) dans des revêtement de protection thermique destinés à des pièce de turbine.

### EXPOSE DE L'INVENTION

Un but de l'invention est d'augmenter la résistance d'une pièce aéronautique aux composés CMAS.

Un autre but de l'invention est de proposer un revêtement permettant à une pièce aéronautique de résister aux composés CMAS différent d'un revêtement connu de l'art antérieur.

Un autre but de l'invention est de proposer un revêtement permettant à une pièce aéronautique de résister aux composés CMAS et présentant des propriétés mécaniques et/ou chimiques ajustables.

Ces buts sont atteints dans le cadre de la présente invention grâce à une pièce aéronautique, comprenant :
- un substrat,
- une barrière environnementale comprenant au moins une couche choisie parmi une couche thermiquement isolante, une sous-couche adaptée à promouvoir l'adhésion entre le substrat et une couche thermiquement isolante et une couche protectrice adaptée à protéger le substrat de l'oxydation et/ou de la corrosion, la barrière environnementale recouvrant au moins en partie le substrat,
- au moins une couche réactive adaptée à réagir avec au moins un composé CMAS choisi parmi un oxyde de calcium, un oxyde de magnésium, un oxyde d'aluminium et un oxyde de silicium, la couche réactive recouvrant au moins une partie de la barrière environnementale,
caractérisée en ce que le matériau de la couche réactive comprend au moins un oxyde de formule A'₄₋ₓA"ₓB'_{2-y}B"_{y}O_{11-δ}, A' étant choisi parmi une terre rare, l'yttrium et le scandium, A" étant choisi parmi une terre rare, l'yttrium, le scandium et l'aluminium, B' étant choisi parmi le tantale et le niobium, B" étant choisi parmi le tantale, le niobium, le zirconium, le hafnium, l'aluminium et le césium, x et y étant des nombres réels compris entre 0 et 2 et δ étant un nombre réel compris entre -1 et 2, et préférentiellement compris entre -1 et 1.

L'invention est avantageusement complétée par les caractéristiques suivantes, prises individuellement ou en l'une quelconque de leurs combinaisons techniquement possibles :
- l'oxyde présente majoritairement en volume une maille cubique,
- l'oxyde présente une fraction atomique en terre rare comprise entre 18% et 24%,
- A' et A" sont le même élément, A' et A" étant choisis parmi une terre rare, le scandium et l'yttrium et préférentiellement, A' et A" sont un élément choisi parmi les lanthanides,
- B' et B" sont le même élément, B' et B" étant choisis parmi le tantale et le niobium,
- l'oxyde est adapté à former au moins un précipité comprenant de l'apatite et/ou de l'anorthite au contact d'un composé CMAS choisi parmi un oxyde de calcium, un oxyde de magnésium, un oxyde d'aluminium et un oxyde de silicium,
- l'oxyde présente majoritairement une maille cristalline cubique,
- l'oxyde présente majoritairement une maille cristalline présentant un groupe d'espace de type [Math. 1] *Fm3̅m*,
- la couche réactive recouvre directement une couche choisie parmi la couche thermiquement isolante et la couche protectrice,
- la couche réactive présente une épaisseur comprise entre 5 µm et 500 µm,
- l'oxyde est adapté à former un produit lors d'une première réaction avec le composé CMAS, ledit produit étant adapté à former une phase apatite lors d'une deuxième réaction avec le composé CMAS et/ou avec un autre produit de la première réaction,
- la couche réactive comprend également au moins un oxyde complémentaire choisi parmi la zircone yttriée, Al₂O₃, Y₂O₃-ZrO₂-Ta₂O₅ et un oxyde de formule C₂D₂0₇, dans lequel C est choisi parmi une terre rare et de l'yttrium, et D est choisi parmi de la zircone et du silicium,
- la fraction volumique moyenne dudit oxyde dans la couche réactive varie à mesure que l'on s'éloigne du substrat,
- la couche réactive comprend au moins 50% en volume dudit oxyde.

L'invention concerne également un procédé de protection d'une pièce aéronautique, par exemple une pièce de turbine, comprenant une étape de dépôt, sur la pièce, d'une couche réactive adaptée à réagir avec au moins un composé CMAS choisi parmi un oxyde de calcium, un oxyde de magnésium, un oxyde d'aluminium et un oxyde de silicium, caractérisée en ce que le matériau de la couche réactive comprend un oxyde de formule A'₄₋ₓA"ₓB'_{2-y}B"_{y}O_{11-δ}, A' étant choisi parmi une terre rare et de l'yttrium, A'' étant choisi parmi une terre rare, l'yttrium, l'aluminium et le scandium, B' étant choisi parmi le tantale et le niobium, B" étant choisi parmi le tantale, le niobium, le zirconium, le hafnium et le césium, x et y étant des nombres réels compris entre 0 et 2 et δ étant un nombre réel compris entre -1 et 2, et préférentiellement compris entre -1 et 1.

Le procédé est avantageusement complété par les caractéristiques suivantes, prises individuellement ou en l'une quelconque de leurs combinaisons techniquement possibles :
- la pièce comprend un substrat, une barrière environnementale comprenant au moins une couche choisie parmi une couche thermiquement isolante, une sous-couche adaptée à promouvoir l'adhésion entre le substrat et la couche thermiquement isolante et une couche protectrice adaptée à protéger le substrat de l'oxydation et/ou de la corrosion, la barrière environnementale recouvrant au moins en partie le substrat, la couche réactive déposée recouvrant au moins en partie la barrière environnementale, la couche réactive étant déposée sur la barrière environnementale,
- la couche réactive est déposée par une méthode choisie parmi la projection plasma à pression atmosphérique, la projection plasma de suspensions, la projection plasma de solutions, la projection par flamme à grande vitesse en voie poudre, l'évaporation par faisceau d'électrons, le dépôt en phase vapeur, le sol-gel et l'électrophorèse.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] - la figure 1 illustre schématiquement une section d'une pièce de turbine, par exemple une aube de turbine ou une ailette de distributeur,
[Fig. 2] - la figure 2 est une microphotographie illustrant une section de substrat recouvert d'une barrière environnementale,
[Fig. 3] - la figure 3 est une microphotographie, illustrant l'insertion de composés CMAS fondus dans la barrière environnementale,
[Fig. 4] - la figure 4 est une microphotographie, illustrant l'insertion de composés CMAS fondus dans la barrière environnementale,
[Fig. 5] - la figure 5 est une microphotographie illustrant la rupture d'une barrière environnementale,
[Fig. 6] - la figure 6 une microphotographie illustrant la rupture d'une barrière envi ronnementale,
[Fig. 7] - la figure 7 illustre schématiquement une pièce de turbine comprenant un revêtement selon l'invention,
[Fig. 8] - la figure 8 illustre schématiquement une pièce de turbine comprenant un revêtement selon l'invention, en contact avec des composés CMAS,
[Fig. 9] - la figure 9 illustre schématiquement une pièce de turbine comprenant un revêtement selon l'invention.

Sur l'ensemble des figures, les éléments similaires portent des références identiques.

### DEFINITIONS

On désigne par le terme « superalliage » un alliage présentant, à haute température et à haute pression, une très bonne résistance à l'oxydation, à la corrosion, au fluage et à des contraintes cycliques (notamment mécaniques ou thermiques). Les superalliages trouvent une application particulière dans la fabrication de pièces utilisées dans l'aéronautique, par exemple des aubes de turbine, car ils constituent une famille d'alliages à haute résistance pouvant travailler à des températures relativement proches de leurs points de fusion (typiquement 0,7 à 0,8 fois leurs températures de fusion).

Un superalliage peut présenter une microstructure biphasique comprenant une première phase (appelée « phase γ ») formant une matrice, et une deuxième phase (appelée « phase γ' ») formant des précipités durcissant dans la matrice. La coexistence de ces deux phases est désignée par phase γ- γ'.

La « base » du superalliage désigne le composant métallique principal de la matrice. Dans la majorité des cas, les superalliages comprennent une base fer, cobalt, ou nickel, mais également parfois une base titane ou aluminium. La base du superalliage est préférentiellement une base nickel.

Les « superalliages base nickel » présentent l'avantage d'offrir un bon compromis entre résistance à l'oxydation, résistance à la rupture à haute température et poids, ce qui justifie leur emploi dans les parties les plus chaudes des turboréacteurs.

Les superalliages base nickel sont constitués d'une phase γ (ou matrice) de type austénitique cubique à face centrée γ-Ni, contenant éventuellement des additifs en solution solide de substitution α (Co, Cr, W, Mo), et d'une phase γ' (ou précipités) de type γ'-Ni₃X, avec X = Al, Ti ou Ta. La phase γ' possède une structure L12 ordonnée, dérivée de la structure cubique à face centrée, cohérente avec la matrice, c'est-à-dire ayant une maille atomique très proche de celle-ci.

On désigne par le terme « fraction volumique » le rapport du volume d'un élément ou d'un groupe d'éléments sur le volume total.

On désigne par « groupe d'espace » d'un cristal l'ensemble des symétries d'une structure cristalline, c'est-à-dire l'ensemble des isométries affines laissant la structure invariante. Il s'agit d'un groupe au sens mathématique du terme.

### DESCRIPTION DETAILLEE DE L'INVENTION

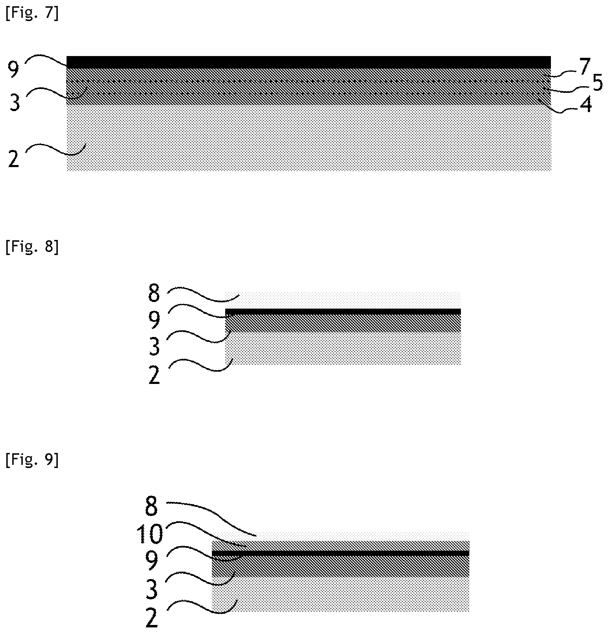

En référence à la figure 7, une pièce 1 comprend un substrat 2. Le substrat 2 peut être préférentiellement un substrat en superalliage, et de préférence en superalliage à base nickel tel que décrit précédemment. Le substrat 2 est recouvert, au moins en partie, d'une barrière environnementale 3. La barrière environnementale 3 peut comprendre, de manière connue, et comme illustré en figure 1, une sous-couche 4 s'étendant entre le substrat 2 et les autres couches de la barrière environnementale 3, recouvrant directement le substrat 2, adaptée à promouvoir l'adhésion entre le substrat 2 et les autres couches de la barrière environnementale 3. La barrière environnementale 3 peut également comprendre une couche de protectrice 5, adaptée à protéger le substrat 2 de l'oxydation et/ou de la corrosion, et recouvrant directement la sous-couche 4. La couche protectrice 5 est par exemple formée par oxydation de la sous-couche 4. Elle peut par exemple être en alumine. La barrière environnementale 3 peut également comprendre une couche thermiquement isolante 7, recouvrant directement la couche protectrice 5.

La pièce 1 comprend également une couche réactive 9 adaptée à réagir avec au moins un composé CMAS 8. Le composé CMAS 8 peut être un oxyde de calcium, un oxyde de magnésium, un oxyde d'aluminium et /ou un oxyde de silicium. La couche réactive 9 recouvre au moins en partie la barrière environnementale 3. Elle peut recouvrir directement au moins une des couches de la barrière environnementale 3, choisie parmi la couche protectrice 5 et la couche thermiquement isolante 7. Différentes couches réactives 9 peuvent également recouvrir différentes couches de la barrière environnementale 3. Le mode de réalisation illustré dans la figure 1 comprend au moins une couche réactive 9 recouvrant l'ensemble des couches de la barrière environnementale 3. La couche réactive 9 peut présenter une épaisseur comprise entre 5 µm et 500 µm, de manière à permettre la formation d'une phase apatite au contact d'un composé CMAS 8.

Le matériau de la couche réactive 9 comprend un oxyde de formule A'₄,A",B'₂. _{y}B''_{y}O_{11-δ}, A' étant choisi parmi une terre rare et l'yttrium, A'' étant choisi parmi une terre rare, l'yttrium, l'aluminium et le scandium, B' étant choisi parmi le tantale et le niobium, B" étant choisi parmi le tantale, le niobium, le zirconium, le hafnium, l'aluminium et le césium, x et y étant des nombres réels compris entre 0 et 2 et δ étant un nombre réel compris entre -1 et 2, et préférentiellement compris entre -1 et 1. Cette formule permet à l'oxyde de la couche réactive 9 (ci-après « l'oxyde ») de présenter majoritairement en volume une maille cubique. Ainsi, le matériau de la couche réactive 9 comprend une fraction volumique en terre rare et/ou en Yttrium assez élevée pour permettre une précipitation rapide du ou des composés CMAS fondus, et éviter leur introduction dans des interstices présentés dans la barrière environnementale 3. De manière concomitante, l'oxyde, de par sa composition, présente majoritairement en volume une maille cubique, ce qui lui permet de présenter une fraction atomique élevée en terres rares et/ou en yttrium. Le tableau 1 comprend les différents éléments A', A", B' et B" qui peuvent être choisis pour l'oxyde.

**[Tableau 1]**

| A' | A" | B' | B" |
|---|---|---|---|
| Sc, Y, La, Ce, Pr, Nd, Pm, Sm, Eu, Gd, Tb, Dy, Ho, Er, Tm, Yb, Lu | Sc, Y, La, Ce, Pr, Nd, Pm, Sm, Eu, Gd, Tb, Dy, Ho, Er, Tm, Yb, Lu, Al | Ta, Nb | Ta, Nb, Zr, Hf, Al, Ce |

Ainsi, le matériau de l'oxyde peut présenter une fraction atomique en terre rare et/ou en yttrium comprise entre 18 % et 24 %. Cette gamme de fraction atomique en terre rare et/ou en yttrium, plus élevée que celle de Gd₂Zr₂O₇ par exemple, permet au matériau de la couche réactive 9 de présenter une cinétique de réaction avec le ou les composés CMAS 8 plus rapide que celle des matériaux décrit dans l'art antérieur (par exemple Gd₂Zr₂O₇). Ainsi, le ou les composés CMAS 8 fondus en contact avec la couche réactive 9 sont immobilisés plus rapidement, ou ralentis par une production d'une phase apatite, épaississant et/ou solidifiant le composé réactif CMAS 8 à l'interface avec la barrière environnementale 3, et évitant le contact entre le ou les composés CMAS 8 et d'autres parties de la barrière environnementale 3.

Avantageusement, les éléments A' et A" peuvent être différents. Ainsi, la réactivité de l'oxyde par rapport à un/aux CMAS 8 peut être augmentée par la formation de différentes phases, dont au moins une phase apatite, par exemple de formule générale Ca₂RE₈(SiO₄)₆0₂, RE étant une terre rare ou l'yttrium. Y₂Gd₂Ta₂O₁₁ et Y₂Yb₂Ta₂O₁₁ sont des exemples de compositions utilisées pour l'oxyde, dans lesquelles A' et A" sont des éléments différents.

Avantageusement, les éléments B' et B" peuvent être différents. Ainsi, les propriétés mécaniques de l'oxyde peuvent être ajustées. La résistance mécanique peut par exemple être plus élevée. Gd₄Ta_{1,5}Zr_{0,5}O_{10,75}, Gd₄Nb_{1,5}Zr_{0,5}O_{10,75}, La₄Ta_{1,5}Hf_{0,5}O_{10,75} sont des exemples de compositions utilisées pour l'oxyde, dans lesquelles B' et B" sont des éléments différents.

Avantageusement, les éléments A', A'', B' et B" sont choisis de manière à permettre la formation d'une phase apatite et d'une phase anorthite quand l'oxyde et un composé CMAS 8 sont en contact. La phase apatite et la phase anorthite sont alors bloquantes ou étanchéifiantes par rapport aux composés CMAS 8. De plus, la réactivité de l'oxyde au regard des composés CMAS 8 peut être augmentée. Préférentiellement, A' et/ou B' sont de l'aluminium. De par la fraction volumique d'aluminium de la couche réactive 9, le composé CMAS 8 peut être enrichi localement en oxyde d'aluminium, et être plus facilement cristallisable. La₃AlTaAlO₁₀, Gd_{3,1}Al_{0,9}Ta_{1,7}Ti_{0,3}O_{10,85} (pas selon l'invention) sont des exemples de compositions permettant de former à la fois une phase apatite et une phase anorthite au contact d'un composé CMAS 8.

Avantageusement, les éléments A', A'', B' et B" sont choisis de manière à permettre la formation d'un oxyde secondaire, issu de la réaction entre l'oxyde et le ou les composés CMAS 8. L'oxyde secondaire formé est réactif à des produits secondaires de la réaction entre l'oxyde et le ou les composés CMAS 8, comme par exemple Ta₂O₅ ou Nb₂O₅, ZrO₂, CaO, MgO, HfO₂, CaTiO₃ et MgTiO₃, et adapté à former une phase apatite lors de la réaction avec ces produits secondaires. Par exemple, un oxyde de formule générale A₄B₂O_{11-δ} (A étant choisi parmi Y, La et Lu, et B étant choisi parmi Ta et Nb) est adapté à former un oxyde secondaire de formule générale A₆B₄O₁₉. La fraction atomique en cation réactifs (c'est-à-dire en composé A) dans l'oxyde secondaire est sensiblement égale à 20,69 %.

Les éléments A' et A" peuvent être le même élément A : l'oxyde de la couche réactive 9 peut être décrit par la formule A₄ B'_{2-y}B"_{y}O_{11-δ}. Les éléments de l'oxyde sont choisis parmi les éléments décrits dans le tableau 2.

**[Tableau 2]**

| A | B' | B" |
|---|---|---|
| Sc, Y, La, Ce, Pr, Nd, Pm, Sm, Eu, Gd, Tb, Dy, Ho, Er, Tm, Yb, Lu | Ta, Nb | Ta, Nb, Zr, Hf, Al, Ce |

Ainsi, la fraction atomique en terre rare et/ou en yttrium et/ou en scandium et/ou en aluminium peut être augmentée par rapport aux oxydes connus, de par la structure de l'oxyde.

Les éléments B' et B" peuvent également être le même élément B, choisi parmi Ta et Nb. Dans ce cas, la formule générale de l'oxyde est A'₄₋ₓA"ₓB₂O_{11-δ}.

Avantageusement, et pour simplifier la fabrication de la couche réactive 9, les mêmes éléments peuvent être choisis d'une part pour A' et A" et d'autre part pour B' et B". Dans ce cas, l'oxyde peut être décrit par la formule A₄B₂O₁₁.

La couche réactive 9 peut également comprendre au moins un oxyde complémentaire choisi parmi la zircone yttriée, Al₂O₃, Y₂O₃-ZrO₂-Ta₂O₅ et un oxyde de formule C₂D₂0₇, dans lequel C est choisi parmi une terre rare et de l'yttrium et D est choisi parmi de la zircone et du silicium. Le ou les oxydes complémentaires sont connus pour présenter des propriétés permettant d'accroître la durée de vie des pièces exposées aux composés CMAS. Le ou les oxydes complémentaires présentent des propriétés différentes de l'oxyde, telles que la cinétique de réaction avec le composé CMAS et/ou les produits de réaction avec le composé CMAS. Les propriétés de l'oxyde et de l'oxyde complémentaire peuvent ainsi être combinées dans la couche réactive 9.

La couche réactive 9 peut également présenter une fraction volumique moyenne en oxyde variant à mesure que l'on s'éloigne du substrat 2. Ainsi, La couche réactive 9 présente un gradient de fraction volumique en oxyde. Une couche réactive 9 présentant un gradient d'oxyde peut par exemple être fabriquée en déposant une succession de sous-couches réactives, chaque sous-couche présentant une fraction volumique différente en oxyde.

Un autre aspect de l'invention est un procédé de protection d'une pièce au(x) sable(s) fondu(s). Le procédé comprend une étape de dépôt de la couche réactive 9 telle que décrite précédemment, sur une pièce 1. Après le dépôt, la pièce 1 comprend la couche réactive 9. La couche réactive 9 peut être déposée directement sur le substrat 2 de la pièce 1, par exemple un substrat 2 en superalliage, ou sur une ou plusieurs couches d'une barrière environnementale 3. Le dépôt de la couche réactive 9 peut être réalisé sur au moins l'une des couches formant la barrière environnementale 3, et préférentiellement sur la couche thermiquement isolante 7. Ainsi, et contrairement aux pièces connues, la pièce 1 comprenant la couche réactive 9 déposée sur la couche thermiquement isolante 7 présente une réactivité suffisante avec le ou les composés CMAS 8 pour produire au moins une phase apatite avant l'insertion du ou des composés CMAS 8 fondu dans les interstices de la couche thermiquement isolante 7, et ainsi éviter ou limiter cette insertion. De cette manière, le ou les composés CMAS 8 peuvent plus difficilement accéder à la surface de la barrière environnementale 3, et leur effet sur la rupture de la barrière environnementale 3 est limité.

### Exemples

### Example 1 : réaction entre un CMAS liquide et une couche réactive de Gd₄Nb_{1,5}Zr_{0,5}O_{10,75}

En référence à la figure 8, une couche réactive 9 comprenant l'oxyde Gd₄Nb_{1,5}Zr_{0,5}O_{10,75} est soumise à une agression chimique par un CMAS fondu 8. La couche réactive 9 est déposée par projection par flamme à grande vitesse en voie poudre (SPS, acronyme anglais de *Spark Plasma Sintering*)*.*

En référence à la figure 9, après un temps de réaction par exemple supérieur à 5 min, préférentiellement supérieur à 1 minute, une partie de la couche réactive 9 est dissoute par le composé CMAS 8, et une phase d'apatite Ca₂Gd₈(SiO₄)₆O₂ étanche aux CMAS 8 fondus est formée entre la couche réactive 9 et les CMAS 8 fondus. La couche de Ca₂Gd₈(SiO₄)₆O₂ est également étanche aux autres produits de la réaction (produits secondaires) entre la couche réactive 9 et les composés CMAS 8. La couche de Ca₂Gd₈(SiO₄)₆O₂ permet également de produire des phases secondaires, permettant de protéger la couche réactive 9. La barrière environnementale 3 ne présente aucune fissure. En effet, le réservoir de cations composés A, c'est-à-dire A' et A" quand A' et A" sont le même élément, permet de former une couche étanche et donc de limiter la profondeur de pénétration, par rapport à l'utilisation d'une couche réactive connue telle que à La₂Zr₂O₇.

### Exemple 2 : réaction entre un CMAS liquide et une couche réactive de Y₂Gd₂Ta₂O₁₁

En référence à la figure 8, une couche réactive 9 comprenant l'oxyde Y₂Gd₂Ta₂O₁₁ est soumise à une agression chimique par un CMAS fondu 8. La couche réactive 9 est déposée par projection par flamme à grande vitesse en voie poudre (SPS, acronyme anglais de *Suspension Plasma Spraying*)*.*

En référence à la figure 8b, après un temps de réaction par exemple supérieur à 5 min, préférentiellement supérieur à 1 minute, une partie de la couche réactive 9 est dissoute par le composé CMAS 8, et deux phases d'apatite Ca₂Gd₈(SiO₄)₆O₂ et Ca₂Y₆(SiO₄)₆O₂ étanches aux CMAS 8 fondus sont formées entre la couche réactive 9 et les CMAS 8 fondus. La barrière environnementale 3 ne présente aucune fissure. En effet, le réservoir de cations Y et Gd permet de former deux couches étanches en grande quantité et donc de limiter la profondeur de pénétration, par rapport à l'utilisation d'une couche réactive connue telle que à La₂Zr₂O₇. En effet, six cations Y³⁺ suffisent à former préférentiellement l'apatite Ca₄Y₆(SiO₄)₆O alors que huit cations de Gd³⁺ sont nécessaires à la formation de l'apatite de structure cristallographique plus complexe Ca₂Gd₈(SiO₄)₆O₂. De plus, la formation de deux couches différentes comme produit de la réaction entre la couche réactive 9 et les CMAS 8 augmente la cinétique de cette réaction.

### Exemple 3 : réaction entre un CMAS liquide et une couche réactive de Gd_{3,1}Al_{0,9}Ta_{1,7}Ti_{0,5}O_{10,85} (pas selon l'invention)

En référence à la figure 9, une couche réactive 9 comprenant l'oxyde Gd_{3,1}Al_{0,9}Ta_{1,7}Ti_{0,5}O_{10,85} est soumise à une agression chimique par un CMAS 8 fondu. La couche réactive 9 est déposée par projection par flamme à grande vitesse en voie poudre (SPS, acronyme anglais de *Suspension Plasma Spraying*)*.* En référence à la figure 8b, après un temps de réaction par exemple supérieur à 5 min, préférentiellement supérieur à 1 min, une partie de la couche réactive 9 est dissoute par le composé CMAS 8, et une phase 10 d'apatite Ca₂Gd₈(SiO₄)₆O₂ étanche aux CMAS 8 fondus est formée entre la couche réactive 9 et les CMAS 8 fondus. De plus, une phase anorthite CaAl₂Si₂O₈ a également été produite. Cette phase est en suspension dans le CMAS 8 fondu. La barrière environnementale 3 ne présente aucune fissure. En effet, le réservoir de cations permet de former deux couches étanches en grande quantité et donc de limiter la profondeur de pénétration, par rapport à l'utilisation d'une couche réactive connue telle que à La₂Zr₂O₇. La modification de la mobilité du CMAS 8 par production de la phase secondaire anorthite et de la phase d'apatite limite ainsi la possibilité pour le liquide à pénétrer la couche Gd_{3,1}Al_{0,9}Ta_{1,7}Ti_{0,50}O_{10,85} encore saine.

## Revendications

1. Pièce (1) aéronautique, comprenant :
- un substrat (2),
- une barrière environnementale (3) comprenant au moins une couche choisie parmi une couche thermiquement isolante (7), une sous-couche (4) adaptée à promouvoir l'adhésion entre le substrat (2) et une couche thermiquement isolante (7), et une couche protectrice (5) adaptée à protéger le substrat de l'oxydation et/ou de la corrosion, la barrière environnementale (3) recouvrant au moins en partie le substrat (2),
- au moins une couche réactive (9) adaptée à réagir avec au moins un composé CMAS (8) choisi parmi un oxyde de calcium, un oxyde de magnésium, un oxyde d'aluminium et un oxyde de silicium, la couche réactive (9) recouvrant au moins une partie de la barrière environnementale (3),
**caractérisée en ce que** le matériau de la couche réactive (9) comprend au moins un oxyde de formule A'₄₋ₓA"ₓB'_{2-y}B"_{y}O_{11-δ}, A' étant choisi parmi une terre rare, l'yttrium et le scandium, A" étant choisi parmi une terre rare, l'yttrium, le scandium et l'aluminium, B' étant choisi parmi le tantale et le niobium, B" étant choisi parmi le tantale, le niobium, le zirconium, le hafnium, l'aluminium et le césium, x et y étant des nombres réels compris entre 0 et 2 et δ étant un nombre réel compris entre -1 et 1.

2. Pièce (1) selon la revendication 1, dans laquelle l'oxyde présente majoritairement en volume une maille cubique.

3. Pièce (1) selon la revendication 1 ou 2, dans laquelle l'oxyde présente une fraction atomique en terre rare comprise entre 18% et 24%.

4. Pièce (1) selon l'une des revendications 1 à 3, dans laquelle A' et A" sont le même élément, A' et A" étant choisis parmi une terre rare, le scandium et l'yttrium.

5. Pièce (1) selon l'une des revendications 1 à 4, dans laquelle B' et B" sont le même élément, B' et B" étant choisis parmi le tantale et le niobium.

6. Pièce (1) selon l'une des revendications 1 à 5, dans laquelle la couche réactive (9) recouvre directement une couche choisie parmi la couche thermiquement isolante (7) et la couche protectrice (5).

7. Pièce (1) selon l'une des revendications 1 à 6, dans laquelle la couche réactive (9) présente une épaisseur comprise entre 5 µm et 500 µm.

8. Pièce (1) selon l'une des revendications 1 à 7, dans laquelle la couche réactive (9) comprend au moins 50% en volume dudit oxyde.

9. Pièce (1) selon l'une des revendications 1 à 8, dans laquelle la couche réactive (9) comprend également au moins un oxyde complémentaire choisi parmi la zircone yttriée, Al₂O₃, Y₂O₃-ZrO₂-Ta₂O₅ et un oxyde de formule C₂D₂0₇, dans lequel C est choisi parmi une terre rare et de l'yttrium et D est choisi parmi de la zircone et du silicium.

10. Pièce (1) selon l'une des revendications 1 à 9, dans laquelle la fraction volumique moyenne dudit oxyde dans la couche réactive (9) varie à mesure que l'on s'éloigne du substrat (2).

## Patentansprüche

1. Luftfahrtteil (1), umfassend:
- ein Substrat (2),
- eine Umgebungsbarriere (3), die mindestens eine Schicht umfasst, die aus einer thermisch isolierenden Schicht (7) ausgewählt ist, eine Unterschicht (4), die geeignet ist, die Haftung zwischen dem Substrat (2) und einer thermisch isolierenden Schicht (7) zu fördern, und eine Schutzschicht (5), die geeignet ist, das Substrat vor Oxidation und/oder Korrosion zu schützen, wobei die Umgebungsbarriere (3) das Substrat (2) zumindest teilweise bedeckt,
- mindestens eine reaktive Schicht (9), die geeignet ist, mit mindestens einer CMAS-Verbindung (8) zu reagieren, die aus einem Calciumoxid, einem Magnesiumoxid, einem Aluminiumoxid und einem Siliciumoxid ausgewählt ist, wobei die reaktive Schicht (9) mindestens einen Teil der Umgebungsbarriere (3) bedeckt,
**dadurch gekennzeichnet, dass** das Material der reaktiven Schicht (9) mindestens ein Oxid der Formel A'₄₋ₓA"ₓB'_{2-y}B"_{y}O_{11-δ} umfasst, wobei A' aus einer Seltenen Erde, Yttrium und Scandium ausgewählt ist, A" aus einer Seltenen Erde, Yttrium, Scandium und Aluminium ausgewählt ist, B' aus Tantal und Niob ausgewählt ist, B" aus Tantal, Niob, Zirkonium, Hafnium, Aluminium und Cäsium ausgewählt ist, x und y reelle Zahlen zwischen 0 und 2 sind und δ eine reelle Zahl zwischen -1 und 1 ist.

2. Teil (1) nach Anspruch 1, wobei das Oxid volumenmäßig überwiegend eine kubische Gitterstruktur aufweist.

3. Teil (1) nach Anspruch 1 oder 2, wobei das Oxid einen Atomanteil Seltener Erde zwischen 18 % und 24 % aufweist.

4. Teil (1) nach einem der Ansprüche 1 bis 3, wobei A' und A" dasselbe Element sind, wobei A' und A" aus einer Seltenen Erde, Scandium und Yttrium ausgewählt sind.

5. Teil (1) nach einem der Ansprüche 1 bis 4, wobei B' und B" dasselbe Element sind, wobei B' und B" aus Tantal und Niob ausgewählt sind.

6. Teil (1) gemäß einem der Ansprüche 1 bis 5, wobei die reaktive Schicht (9) direkt eine Schicht bedeckt, die aus der thermisch isolierenden Schicht (7) und der Schutzschicht (5) ausgewählt ist.

7. Teil (1) nach einem der Ansprüche 1 bis 6, wobei die reaktive Schicht (9) eine Dicke zwischen 5 µm und 500 µm aufweist.

8. Teil (1) nach einem der Ansprüche 1 bis 7, wobei die reaktive Schicht (9) mindestens 50 Vol.-% des Oxids umfasst.

9. Teil (1) nach einem der Ansprüche 1 bis 8, wobei die reaktive Schicht (9) ebenfalls mindestens ein komplementäres Oxid umfasst, das aus yttriumhaltigem Zirkon, Al₂O₃, Y₂O₃-ZrO₂-Ta₂O₅ und einem Oxid der Formel C₂D₂O₇ ausgewählt ist, wobei C aus einer Seltenen Erde und Yttrium ausgewählt ist und D aus Zirkon und Silicium ausgewählt ist.

10. Teil (1) nach einem der Ansprüche 1 bis 9, wobei der durchschnittliche Volumenanteil des Oxids in der reaktiven Schicht (9) mit zunehmender Entfernung vom Substrat (2) schwankt.

## Claims

1. An aeronautical part (1), comprising:
- a substrate (2),
- an environmental barrier (3) comprising at least one layer selected from a thermally insulating layer (7), a sublayer (4) suitable for promoting adhesion between the substrate (2) and a thermally insulating layer (7) and a protective layer (5) suitable for protecting the substrate from oxidation and/or corrosion, the environmental barrier (3) at least partially covering the substrate (2)
- at least one reactive layer (9) suitable for reacting with at least one CMAS compound (8) selected from a calcium oxide, a magnesium oxide, an aluminum oxide and a silicon oxide, the reactive layer (9) at least partially covering environmental barrier (3),
**characterized in that** the material of the reactive layer (9) comprises at least one oxide of formula A'₄₋ₓA"ₓB'_{2-y}B"_{y}O_{11-δ}, A' being selected from a rare earth, yttrium and scandium, A" being selected from a rare earth, yttrium, scandium and aluminum, B' being selected from tantalum and niobium, B" being selected from tantalum, niobium, zirconium, hafnium, aluminum and cesium, x and y being real numbers between 0 and 2 and δ being a real number between -1 and 1.

2. The part (1) as claimed in claim 1, wherein the oxide predominantly has a cubic lattice in volume.

3. The part (1) as claimed in claim 1 or 2, wherein the oxide has a rare-earth atomic fraction of between 18% and 24%.

4. The part (1) as claimed in one of claims 1 to 3, wherein A' and A" are the same element, A' and A" being selected from a rare earth, scandium and yttrium.

5. The part (1) as claimed in one of claims 1 to 4, wherein B' and B" are the same element, B' and B" being selected from tantalum and niobium.

6. The part (1) as claimed in one of claims 1 to 5, wherein the reactive layer (9) directly overlies a layer selected from the thermally insulating layer (7) and the protective layer (5).

7. The part (1) as claimed in one of claims 1 to 6, wherein the reactive layer (9) has a thickness of between 5 µm and 500 µm.

8. The part (1) as claimed in one of claims 1 to 7, wherein the reactive layer (9) comprises at least 50% by volume of said oxide.

9. The part (1) as claimed in one of claims 1 to 8, wherein the reactive layer (9) also comprises at least one complementary oxide selected from yttriated zirconia, Al₂O₃, Y₂O₃-ZrO₂-Ta₂O₅ and an oxide of formula C₂D₂O₇, wherein C is selected from a rare earth and yttrium and D is selected from zirconia and silicon.

10. The part (1) as claimed in one of claims 1 to 9, wherein the average volume fraction of said oxide in the reactive layer (9) varies with increasing distance from the substrate (2).
